# EUROPÄISCHE PATENTSCHRIFT

(11) **EP 3 544 714 B1**
(45) Veröffentlichungstag und Bekanntmachung des Hinweises auf die Patenterteilung: **12.08.2020**
(21) Anmeldenummer: 17818430.5
(22) Anmeldetag: 22.11.2017
(51) Int. Cl.: B01D 29/11

(54) **FILTERELEMENT UND FLUIDFILTER MIT DREHBAREM BAJONETTRING**
FILTER ELEMENT AND FLUID FILTER COMPRISING A ROTATABLE BAYONET RING
ÉLÉMENT FILTRANT ET FILTRE POUR FLUIDES MUNI D'UNE BAGUE BAÏONNETTE ROTATIVE

(30) Priorität: 22.11.2016 DE 102016013846
(43) Veröffentlichungstag der Anmeldung: 02.10.2019
(73) Patentinhaber: Mann+Hummel GmbH, 71636 Ludwigsburg (DE)
(72) Erfinder: WILDERMUTH, Andreas, 71672 Marbach (DE); PFLÜGER, Frank, 74343 Sachsenheim (DE); GOEDECKE, Marco, 71665 Vaihingen (DE)
(74) Vertreter: Seyboth, Matthias
(86) Internationale Anmeldenummer: PCT/EP2017/079993
(87) Internationale Veröffentlichungsnummer: WO 2018/095941

(56) Entgegenhaltungen:
- EP-A1- 2 201 993
- WO-A1-2015/173624
- DE-A1-102009 035 033
- DE-A1-102015 014 601

## Beschreibung

### Technisches Gebiet

Die Erfindung betrifft ein Filterelement zum Filtern eines Fluids, insbesondere Kraftstoff oder Öl, das zur austauschbaren Anordnung in einem Filtergehäuse vorgesehen ist, mit ersten Bajonettverschlusselementen, über die das Filterelement mit zweiten Bajonettverschlusselementen des Filtergehäuses lösbar verkoppelbar ist. Darüber hinaus betrifft die Erfindung einen Fluidfilter mit einem Filtergehäuse und mit einem solchen Filterelement.

### Stand der Technik

Ein eingangs genanntes Filterelement ist beispielsweise aus der DE 10 2010 034 787 A1 bekannt geworden. Das bekannte Filterelement weist einenends feststehende erste Bajonettverschlusselemente auf, mittels derer das Filterelement mit zweiten Bajonettverschlusselementen des Filtergehäuses, hier des Gehäusedeckels, unter Bildung eines Bajonettverschlusses lösbar verkoppelbar ist. Durch den Bajonettverschluss ist eine axiale Lagefixierung des Filterelements am Gehäusedeckel sowie - drehrichtungsabhängig - eine drehfeste Verkopplung des Filterelements mit dem Gehäusedeckel bewirkt. Für einen Austausch des Filterelements wird der Gehäusedeckel vom Filtertopf abgeschraubt und dabei das Filterelement gemeinsam mit dem Gehäusedeckel gegenüber dem Filtertopf gedreht und in Richtung seiner Längsachse aus dem Filtertopf herausbewegt.

Ein vergleichbares Filterelement mit endscheibenseitig angeordneten ersten Bajonettverschlusselementen, über die das Filterelement am Gehäusedeckel eines Filtergehäuses lösbar befestigbar ist, ist aus der EP 2 201 993 A1 bekannt geworden. Auch die DE 10 2009 035 033 A1, die DE 10 2015 014 601 A1 und die WO 2015/ 173 624 A1 beschreiben derartige Filterelemente.

In der Praxis müssen Filterelemente in ihrer vorgegebenen Betriebsposition innerhalb des Filtergehäuses eines Fluidfilters häufig über zumindest ein (Radial-) Dichtungselement am Filtergehäuse innenseitig dichtend anliegen. Dadurch kann beispielsweise eine Rohseite des Filterelements zuverlässig gegenüber einer Reinseite des Filterelements abgedichtet bzw. abgetrennt werden. Das Dichtungselement muss dabei in der Regel zwischen dem Filterelement und dem Filtergehäuse in einer zur Längsachse des Filterelements radialen Richtung geklemmt gehalten angeordnet sein, um ein ausreichendes Dichtvermögen des Dichtungselements zu gewährleisten. Dadurch besteht zwischen dem Filterelement und dem Filtergehäuse, d. h. dem Filterdeckel oder dem Filtertopf, zwangsläufig ein erhöhter Reibschluss. Dieser Reibschluss muss, je nachdem mit welchem Gehäuseteil das Filterelement über den Bajonettverschluss verkoppelt ist, beim An- oder Abschrauben des Filterdeckels vom Filtertopf mittels eines hohen Drehmoments überwunden werden. Der Gehäusedeckel kann mithin oftmals nur mit großem Aufwand am Filtertopf angeschraubt bzw. vom Filtertopf abgeschraubt werden.

Es ist deshalb die Aufgabe der Erfindung, ein eingangs genanntes Filterelement sowie einen Fluidfilter mit einem solchen Filterelement anzugeben, die kostengünstig zu fertigen sind und die einen vereinfachten Austausch des Filterelements selbst bei einem großen Reibwiderstand zwischen dem Filterelement und dem Filtergehäuse ermöglichen.

Die das Filterelement betreffende Aufgabe wird durch ein Filterelement mit den in Anspruch 1 angegebenen Merkmalen gelöst. Der erfindungsgemäße Fluidfilter weist die Merkmale gemäß Anspruch 16 auf. Bevorzugte Weiterbildungen der Erfindung sind Gegenstand der Unteransprüche sowie der Beschreibung.

### Ausführungsform(en) der Erfindung

Das erfindungsgemäße Filterelement zeichnet sich gegenüber den bekannten Filterelementen dadurch aus, dass die ersten Bajonettverschlusselemente an einem Bajonettring angeordnet sind, der am Filterelement um die Längsachse des Filterelements rotierbar angeordnet bzw. gelagert ist. Das Filterelement ist über den Bajonettring mit zweiten Bajonettverschlusselementen des Filtertopfs oder des Gehäusedeckels verkoppelbar. Im erstgenannten Fall kann das Filterelement beim Abschrauben des Gehäusedeckels vom Filtertopf trotz einer reibschlüssigen Anlage des Filterelements, beispielsweise über ein eingangs genanntes (Radial-) Dichtungselement, am Gehäusedeckel gemeinsam mit dem Gehäusedeckel gegenüber dem Filtertopf rotatorisch verstellt werden, ohne dass diese Drehbewegung durch den Bajonettverschluss zwischen dem Filterelement und dem Filtertopf gehemmt bzw. behindert wird. Im letztgenannten Fall kann der Bajonettring des Filterelements (bei in Abschraubrichtung geschlossenem Bajonettverschluss) selbst bei einer reibschlüssigen Anlage des Filterelements am Filtertopf gemeinsam mit dem Gehäusedeckel gegenüber dem Filterelement bzw. dem Filtertopf rotatorisch verstellt und so das Filterelement in Richtung seiner Längsachse mit einem verringerten Krafteinsatz aus dem Filtertopf herausbewegt werden. Insgesamt kann bei dem erfindungsgemäßen Filterelement somit das für das Lösen und Abschrauben des Gehäusedeckels vom Filtertopf erforderliche Öffnungsdrehmoment erheblich reduziert werden. In gleicher Weise kann beim Aufschrauben des Gehäusedeckels das dafür erforderliche Schließdrehmoment reduziert werden. Insgesamt kann das Filterelement dadurch einfacher und zügiger ausgetauscht werden.

Der Bajonettring ist nach der Erfindung vorzugsweise an einer Endscheibe des Filterelements angeordnet, insbesondere mit dieser verrastet. Der Bajonettring kann grundsätzlich ab Werk oder erst unmittelbar vor einem Einbau des Filterelements auf die Endscheibe des Filterelements aufgeklipst werden. Darüber hinaus können auch existierende Filterelemente auf einfache Weise mit dem Bajonettring nachgerüstet werden, um so eine nochmals größere Einsatzbreite der Filterelemente zu ermöglichen.

Der Bajonettring weist im Falle einer vorgenannten Rastverbindung im einfachsten Fall zwei oder mehr erste Rastelemente bzw. Rastfinger auf, die sich vom Bajonettring vorzugsweise in einer zu den Bajonettverschlusselementen entgegengesetzten Richtung wegerstrecken. Die Rastelemente sind am Bajonettring vorzugsweise unmittelbar angeformt. Dadurch kann der Bajonettring gemeinsam mit den Rastfingern einstückig als ein Kunststoffspritzgussteil ausgeführt sein. Dies bietet insbesondere bei einer Massenfertigung des Filterelements Kostenvorteile.

Die Rastelemente des Bajonettrings können die Endscheibe des Filterelements im einfachsten Fall randseitig, beispielsweise im Bereich ihres äußeren Randabschnitts, hintergreifen. Dadurch kann zugleich eine mechanische stabile Verkopplung der beiden Bauteile erreicht werden. Darüber hinaus kann bei einer auf das Filtergehäuse abgestimmten radialen Dimensionierung der Rastelemente einem unerwünschten Abrutschen der Rastelemente von der Endscheibe auf einfache und effektive Weise entgegengewirkt werden. So können die Rastelemente beispielsweise derart ausgebildet sein, dass sich diese an einer Gehäuseinnenwand des Filtertopfs in radialer Richtung abstützen können. Dadurch kann eine radial gerichtete Auslenkung der Rastfinger relativ zur Endscheibe und damit ein unerwünschtes axiales Abrutschen der Rastfinger von der Endscheibe des Filterelements verhindert werden.

Eine gegenüber axialen Zugbelastungen besonders widerstandsfähige Verrastung des Bajonettrings an der Endscheibe kann nach der Erfindung dadurch erreicht werden, dass der Bajonettring kreisförmig geschlossen ausgeführt ist. Der Bajonettring kann dabei die Endscheibe vorzugsweise vollumfänglich umgreifen.

Für eine nochmals weiter vereinfachte Montage des Bajonettrings am Filterelement weist der Bajonettring vorzugsweise eine nach radial innen vorstehende Anschlagskontur für die Endscheibe auf. Dadurch kann beim Aufklipsen des Bajonettrings auf die Endscheibe eine maximale axiale Einführtiefe der Endscheibe in den Bajonettring eingestellt bzw. vorgegeben und so ein zuverlässiges Verrasten des Bajonettrings mit der Endscheibe gewährleistet werden. Die Anschlagskontur kann insbesondere eine Ringfläche umfassen.

Der Bajonettring kann erfindungsgemäß mit einem axialen Spiel an der Endscheibe des Filterelements verrastet gehalten angeordnet sein. Bei der Demontage des Gehäusedeckels vom Filtertopf kann dadurch ein Lösen der Schraubverbindung zwischen den beiden Gehäuseteilen nochmals weiter vereinfacht werden, weil das Filterelement nicht gleich zu Beginn der Schraubbewegung des Gehäusedeckels mit dem Gehäusedeckel in axialer Richtung mitbewegt werden muss. Dadurch kann das vorgenannte (Radial-) Dichtungselement des Filterelements vereinfacht in axialer Richtung aus seinem Dichtsitz befreit bzw. losgerissen werden.

Analog zu den Rastfingern des Bajonettrings können erfindungsgemäß auch die Bajonettverschlusselemente am Bajonettring angeformt sein. Der Bajonettring kann mithin gemeinsam mit den Rastelementen und den Bajonettverschlusselementen ohne Weiteres kostengünstig als ein einstückiges Kunststoffspritzgussteil ausgeführt sein.

Für eine nochmals weiter vereinfachte Montage des Filterelements im Filtergehäuse kann der Bajonettring nach der Erfindung mit einer Drehpositionsanzeige versehen sein, mittels derer eine relative Drehposition des Bajonettrings gegenüber dem Filterelement bzw. dem Filtertopf, in dem das Filterelement anzuordnen ist, angezeigt werden kann. Die Drehpositionsanzeige kann nach einer bevorzugten Weiterbildung der Erfindung als ein Profilfortsatz des Bajonettrings ausgebildet sein, der sich vom Bajonettring axial in Richtung einer von der den Bajonettring tragenden Endscheibe beabstandet angeordneten weiteren Endscheibe des Filterelements wegerstrecken. In diesem Falle überdeckt die Drehpositionsanzeige das Filterelement bzw. dessen Filtermedium somit abschnittsweise in einer radialen Richtung. Eine derartige Drehpositionsanzeige ist aus unterschiedlichen Blickwinkeln gut zu erkennen und einfach zu produzieren. Die Drehpositionsanzeige ist dem Bajonettring aus Kostengründen vorzugsweise unmittelbar angeformt. Durch eine solchermaßen ausgeführte Drehpositionsanzeige kann der Bajonettring darüber hinaus händisch in einer jeweiligen Drehposition relativ zum Filtertopf bzw. Gehäusedeckel des Filtergehäuses angeordnet, arretiert bzw. in Eingriff mit den korrespondierenden zweiten Bajonettverschlusselementen des Filtergehäuses gebracht werden.

Zum Herstellen des vorgenannten Bajonettverschlusses zwischen dem Bajonettring und den gehäusefest angeordneten zweiten Bajonettverschlusselementen bzw. auch zum Lösen des Bajonettverschlusses sind der Bajonettring und das Filterelement relativ zueinander nicht vollständig frei drehbar. Dadurch kann beispielsweise mittels des Filterelements auf den Bajonettring ein definiertes (geringes) Drehmoment übertragen werden. Das Rotieren erfordert somit ein Überschreiten einer vorbestimmten Drehmomentschwelle. Das Drehmoment liegt dabei zwischen dem Filterelement, insbesondere der Endscheibe, und dem Bajonettring an. Die Drehmomentschwelle ist bevorzugt derart vorbestimmt, dass das Lösen mit einer Hand möglich ist. Geeignete Werte sind beispielsweise im Bereich von 0,1 bis 20 Nm, insbesondere von 0,5 bis 10 Nm. Dies kann nach der Erfindung beispielsweise durch einen Reibschluss zwischen dem Bajonettring und dem Filterelement, insbesondere der vorstehend erläuterten Endscheibe, erreicht werden. Hierzu können die Rastelemente des Bajonettrings in ihrer an der Endscheibe verrasteten Position beispielsweise elastisch vorgespannt an der Endscheibe anliegen.

Nach einer besonders bevorzugten Weiterbildung der Erfindung ist zwischen dem Bajonettring und der Endscheibe eine Rastung bzw. Rastverbindung vorgesehen. Eine solche Rastung ist nur durch ein definiertes Drehmoment überwindbar. Die Rastung kann dabei grundsätzlich eine Klemmrolle, einen Klemmkörper, eine Sperrklinke, Klauenringe oder auch eine Schlingenfeder umfassen. Besonders bevorzugt weist die den Bajonettring tragende Endscheibe eine Vielzahl von Rastvertiefungen auf, die in Umfangsrichtung der besagten Endscheibe hintereinanderliegend aufgereiht angeordnet sind. Die Rastvertiefungen können sich dabei in axialer oder in radialer Richtung in das Material der Endscheibe hineinerstrecken. Der Bajonettring weist vorzugsweise zumindest ein zu den Rastvertiefungen korrespondierendes Rastelement auf, das beispielsweise in Form einer Rastnase ausgebildet sein kann. Das Rastelement wirkt mit den Rastvertiefungen derart zusammen, dass das Rastelement bei Überschreiten eines vorgegebenen Drehmoments zwischen den beiden Bauteilen aus der jeweiligen Rastvertiefung herausbewegt wird und dadurch eine Drehbewegung der Endscheibe und des Bajonettrings relativ zueinander ermöglicht ist. Das Rastelement greift nachfolgend selbsttätig in eine benachbart angeordnete weitere Rastvertiefung der Endscheibe ein. Die vorgenannte Ausführungsform einer Rastung ist besonders kostengünstig zu fertigen und auch nach einem längerfristigen Betriebseinsatz des Filterelements funktionstüchtig. Es versteht sich, dass alternativ auch der Bajonettring mit Rastvertiefungen, insbesondere umlaufenden Rastvertiefungen, und die Endscheibe mit zumindest einem Rastelement, insbesondere einer Rastnase, versehen sein können, welches mit den Rastvertiefungen zusammenwirkt.

Der erfindungsgemäße Fluidfilter umfasst ein Filtergehäuse mit einem Filtertopf und mit einem Gehäusedeckel, die über eine Gewindepaarung unmittelbar miteinander verschraubbar sind. Der Gehäusedeckel ist mit anderen Worten in ein Gewinde des Filtertopfs einschraubbar. Ein vorstehend erläutertes Filterelement ist über den Bajonettring mit gehäusefest angeordneten zweiten Bajonettverschlusselementen, insbesondere des Filtertopfs, unter Bildung eines Bajonettverschlusses lösbar verkoppelbar. Der Fluidfilter ist kostengünstig zu fertigen und ermöglicht ein vereinfachtes Entfernen bzw. Austauschen des Filterelements, insbesondere nach einem langen Betriebseinsatz bzw. bei einem hohen Verschmutzungsgrad. Beim Abschrauben des Gehäusedeckels kann der Gehäusedeckel, sofern das Filterelement über einen Bajonettverschluss am Filtertopf axial lagefixiert befestigt ist, aufgrund der Gewindesteigung der zwischen dem Gehäusedeckel und dem Filtertopf gegebenen Gewindepaarung alleinig in einer zur Filterelementlängsachse axialen Richtung an dem Filterelement entlang aus dem Filtergehäuse herausbewegt werden. Das Filterelement kann nachfolgend aus seiner Bajonettverbindung mit dem Filtertopf gelöst und aus dem Filtertopf entnommen werden.

Nachstehend wird die Erfindung anhand eines in der Zeichnung wiedergegebenen Ausführungsbeispiels näher erläutert. In der Zeichnung zeigen:
- Fig. 1: ein Filterelement mit einer Endscheibe, an der ein Bajonettring um die Längsachse des Filterelements rotatorisch verstellbar angeordnet ist;
- Fig. 2: das Filterelement aus Fig. 1 in einer Schnittdarstellung;
- Fig. 3: das Filterelement aus Fig. 2 vor der Montage des Bajonettrings; und
- Fig. 4: einen Fluidfilter mit einem Filtergehäuse, aufweisend einen Filtertopf und einen Gehäusedeckel sowie ein im Filtergehäuse in seiner vorgegebenen Einbauposition angeordnetes Filterelement gemäß Fig. 1, wobei der Bajonettring des Filterelements mit zweiten Bajonettverschlusselementen des Filtertopfs im Eingriff steht und so das Filterelement in seiner Einbauposition am Filtertopf axial lagefixiert gehalten ist, in einer Schnittdarstellung.

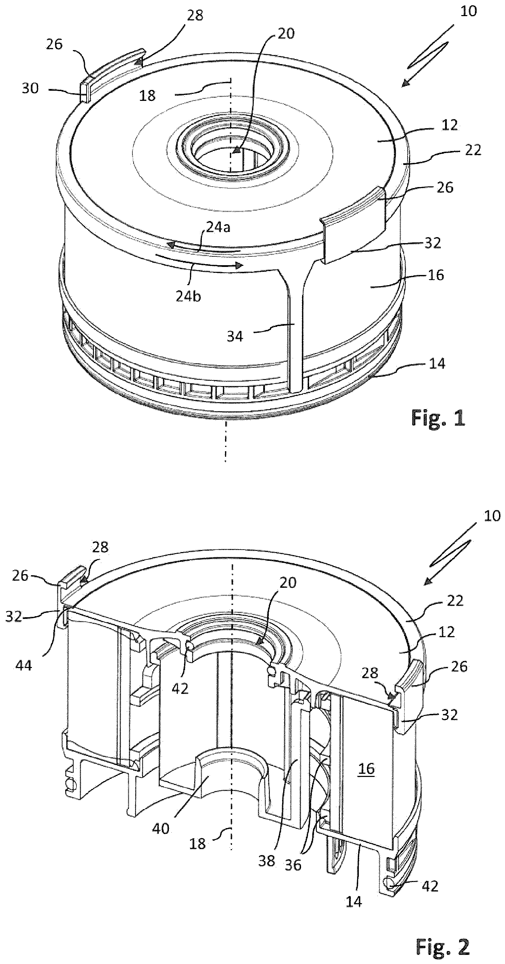

**Fig. 1** zeigt ein Filterelement **10** zum Filtern eines Fluids, insbesondere Kraftstoff oder Öl, das für den austauschbaren Einsatz in einem Filtergehäuse mit einem Filtertopf und mit einem Gehäusedeckel vorgesehen ist. Das Filterelement 10 weist eine obere und eine untere Endscheibe **12, 14** auf, zwischen denen ein Filtermedium **16** gehalten angeordnet ist. Das Filtermedium 16 kann im Material der beiden Endscheiben 12, 14 eingebettet, mit den Endscheiben verschweißt oder auch mit diesen verklebt sein. Das Filtermedium 16 ist hier zur Längsachse **18** des Filterelements 10 ringförmig angeordnet und in Form eines sternförmig gefalteten Filterbalgs ausgeführt. Die obere Endscheibe 12 des Filterelements 10 kann mit einer zentralen Strömungsöffnung **20** für das Fluid versehen sein.

An der oberen Endscheibe 12 des Filterelements 10 ist ein Bajonettring **22** verrastet gehalten angeordnet. Der Bajonettring 22 ist um die Längsachse 18 des Filterelements 10 bidirektional, d. h. entlang einer ersten und einer zweiten Drehrichtung **24a, 24b** relativ zur Endscheibe 12 drehbar. Der Bajonettring 22 kann die obere Endscheibe 12 in einer radialen Richtung außenseitig umgreifen und zusätzlich randseitig in axialer Richtung überdecken.

Am Bajonettring 22 sind zwei erste Bajonettverschlusselemente **26** angeordnet, die dazu dienen, das Filterelement 10 mit zweiten Bajonettverschlusselementen des Filtergehäuses unter Bildung eines Bajonettverschlusses lösbar zu verkoppeln. Die ersten Bajonettverschlusselemente 26 sind hier jeweils als Bajonetthaken ausgebildet, die sich in axialer Richtung vom Bajonettring 22 wegerstrecken. Es versteht sich, dass der Bajonettring 22 auch mehr als zwei Bajonettverschlusselemente 26 bzw. Bajonetthaken aufweisen kann.

Gemäß Fig. 1 weisen die ersten Bajonettverschlusselemente 26 in radialer Richtung innenseitig jeweils eine Radialnut **28** auf, die zur Längsachse 18 des Filterelements 10 hin offen ausgeführt ist. Die beiden Radialnuten 28 dienen der Aufnahme von gehäuseseitig angeordneten zweiten Bajonettverschlusselementen. Zu beachten ist, dass die Radialnuten 28 einenends jeweils geschlossen ausgeführt sind, d. h. einen Anschlag 30 für die filtergehäuseseitigen zweiten Bajonettverschlusselemente aufweisen, durch den eine vorgegebene Einführrichtung der zweiten Bajonettverschlusselemente definiert sowie auch deren maximale Einführtiefe in die Radialnut 28 begrenzt ist.

Am Bajonettring 22 sind weiterhin zwei Rastelemente oder Rastfinger **32** angeformt, die sich vom Bajonettring 22 in Richtung der unteren Endscheibe 14 des Filterelements 10 axial wegerstrecken. Die Rastfinger 32 sind hier beispielhaft zu den ersten Bajonetthaken 26 in axialer Richtung fluchtend angeordnet und können mit diesen einstückig ausgeführt sein.

Zur Anzeige einer jeweiligen Drehlage des Bajonettrings 22 relativ zum Filterelement 10 bzw. zum Filtergehäuse dient eine Drehpositionsanzeige **34.** Die Drehpositionsanzeige 34 ist am Bajonettring 22 angeformt und erstreckt sich in Form eines Profilfortsatzes vom Bajonettring 22 axial in Richtung auf die untere Endscheibe 14 des Filterelements 10 weg, um so bei einem Einbau des Filterelements 10 in das Filtergehäuse vereinfacht visuell wahrgenommen werden zu können. Darüber hinaus kann eine gewünschte Drehposition des Bajonettrings 22 relativ zum Filterelement 10 mittels der Drehpositionsanzeige 34 vereinfacht händisch eingestellt werden.

In **Fig. 2** ist das Filterelement 10 in einem Querschnitt gezeigt. Das Filtermedium 16 ist hier vom Fluid beispielhaft in einer zur Längsachse 18 radialen Richtung von außen nach innen durchströmbar. Eine entgegengerichtete Strömungsführung des Fluids ist selbstverständlich möglich. Zur radial innenseitigen Abstützung des Filtermediums 16 dient hier ein gitterförmiges Stützrohr **36.** Das Stützrohr 36 kann an einer der beiden Endscheiben 12, 14 verrastet oder in anderer Weise befestigt sein. Innerhalb des Stützrohrs 36 kann ein Strömungsrohr **38** für das Fluid angeordnet sein, das hier mit einem unteren Anschlussstutzen **40** versehen sein kann. Der Rastsitz des Bajonettrings 22 auf der oberen Endscheibe 12 des Filterelements 10 ist gut zu erkennen. Die beiden Rastelemente 32 des Bajonettrings 22 hintergreifen die obere Endscheibe 14. Die untere Endscheibe 14 weist ein (außendichtendes) Radialdichtungselement **42** auf, das außenseitig an der Endscheibe 14 gehalten angeordnet ist. Dieses Radialdichtungselement 42 dient der dichtenden Anlage des Filterelements 10 am Filtergehäuse, um dadurch eine Rohseite und eine Reinseite des Filterelements 10 gegeneinander abzudichten. Die obere Endscheibe 12 kann im Bereich der zentralen Strömungsöffnung 20 ein weiteres (innendichtendes) Radialdichtungselement 42 aufweisen

Zu beachten ist, dass zwischen dem Bajonettring 22 und der oberen Endscheibe 12 eine gewisse Reibung existiert, um den Bajonettring 22 mit gehäuseseitigen zweiten Bajonettverschlusselementen in Eingriff zu bringen. Diesbezüglich können der Bajonettring 22 und die obere Endscheibe 12 über eine überwindbare Rastung, wie diese beispielsweise von der Lunette einer Taucheruhr her bekannt ist, verkoppelt sein bzw. im gegenseitigen Eingriff stehen. Die Rastung kann dabei beispielsweise eine Klemmrolle, Klemmkörper, Sperrklinke, Klauenringe oder auch eine Schlingenfeder umfassen.

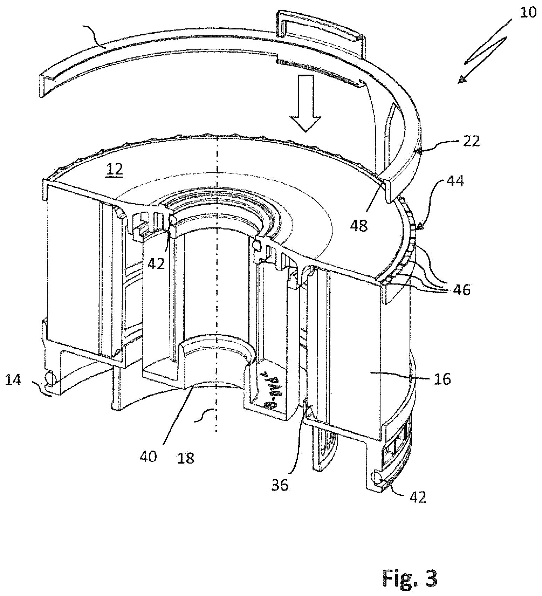

**Fig. 3** zeigt das Filterelement 10 gemäß Fig. 2 vor der Montage des Bajonettrings 22. Die obere Endscheibe 12 des Filterelements 10 weist an ihrem Randabschnitt **44** umlaufend angeordnete Rastvertiefungen **46** auf. Der Bajonettring 22 ist mit zumindest einer Rastnase **48** versehen, die im montierten Zustand des Bajonettrings 22 an der oberen Endscheibe 12 in eine der Rastvertiefungen 46 eingreift. Diese Rastung ist durch einen definierten Drehmomentwert überwindbar, um eine rotatorische Relativbewegung zwischen dem Bajonettring 22 und der Endscheibe 12 bzw. dem Filterelement 10 zu ermöglichen. Wird der definierte Drehmomentwert überschritten, so wird die Rastnase 48 des Bajonettrings 22 aus der jeweiligen Rastvertiefung herausbewegt und greift in eine benachbarte Rastvertiefung. Durch diese Rastung kann eine Bajonettverbindung zwischen dem Bajonettring 22 und den gehäuseseitig angeordneten zweiten Bajonettverschlusselementen auf einfache und zuverlässige Weise geschlossen bzw. gelöst werden.

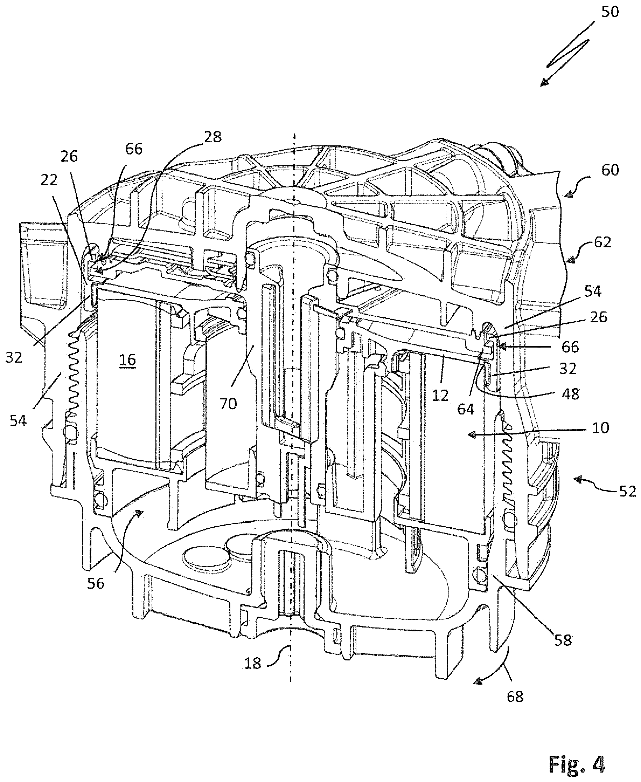

**Fig. 4** zeigt einen Fluidfilter **50** mit einem Filtergehäuse **52** und mit einem vorstehend erläuterten Filterelement 10, das im Filtergehäuse 52 in seiner vorgegebenen Betriebsposition angeordnet ist. Das Filtergehäuse 52 weist einen Filtertopf **54** mit einer unteren Gehäuseöffnung **56** auf, die mittels eines in den Filtertopf 54 eingeschraubten Gehäusedeckels **58** verschlossen ist. Der Filtertopf 54 weist für das zu filternde Fluid einen Einlass **60** und für das gefilterte Fluid einen Auslass **62** auf.

Das Filterelement 10 ist über den Bajonettring 22 mit zweiten Bajonettverschlusselementen **64** des Filtertopfs 54 verkoppelt. Die zweiten Bajonettverschlusselemente 64 greifen in die Radialnuten 28 der ersten Bajonettverschlusselemente 26 ein. Der dadurch gebildete Bajonettverschluss **66** ist derart ausgeführt, dass dieser nur in einer der Abschraubrichtung **68** des Gehäusedeckels 58 entgegengesetzten Drehrichtung 24b des Bajonettrings 22 relativ zum Filtertopf 54 gelöst werden kann. Das Filterelement 10 ist in seiner vorgegebenen Einbauposition über den Bajonettverschluss 66 am Filtertopf 54 in axialer Richtung lagefixiert gehalten.

Es versteht sich, dass der Gehäusedeckel 58 nach einer in der Zeichnung nicht dargestellten Ausführungsform auch auf den Filtertopf 54 aufgeschraubt sein kann. Das Radialdichtungselement 42 der unteren Endscheibe 14 liegt hier am Gehäusedeckel 58 in radialer Richtung vorgespannt dichtend an. Zwischen dem Radialdichtungselement 42 und dem Gehäusedeckel 58 existiert mithin ein Reibschluss. Darüber hinaus liegt die obere Endscheibe 12 des Filterelements 10 an einem gehäusefest angeordneten Fluidstutzen **70,** der sich über die zentrale Strömungsöffnung 20 in das Filterelement 10 hineinerstreckt, außenseitig dichtend an.

Wird der Gehäusedeckel 58 in Richtung der Abschraubrichtung 68 vom Filtertopf 54 abgeschraubt, so wird das Filterelement 10 aufgrund des zwischen der unteren Endscheibe 14 und dem Gehäusedeckel 58 bestehenden Reibschlusses vom Gehäusedeckel 58 mitgenommen und mit diesem gleichsinnig um die Längsachse des Filterelements 10 rotatorisch verstellt. Aufgrund des an der oberen Endscheibe 12 drehbar gelagerten Bajonettrings 22 wird das Filterelement 10 ungeachtet der durch den Drehanschlag 30 bewirkten Drehhemmung des Bajonettrings 22 in Abschraubrichtung 68 des Gehäusedeckels 58 am Ausführen dieser Drehbewegung nicht gehindert. Der Bajonettverschluss 66 wird dabei aufgrund der Rastung zwischen dem Bajonettring 22 und der oberen Endscheibe 12 zuverlässig in seiner Verschlussstellung gehalten.

Beim Abschrauben des Gehäusedeckels 58 vom Filtertopf 54 sowie auch beim Einschrauben des Gehäusedeckels 58 in den Filtertopf 54 muss dieser nicht relativ zum Filterelement 10 sowie dessen innenseitig am Gehäusedeckel 58 anliegenden Radialdichtungselement 42 gedreht werden. Dadurch kann ein für das Abschrauben des Gehäusedeckels 58 vom Filtertopf 54 erforderliches Öffnungsdrehmoment bzw. ein für das Einschrauben des Gehäusedeckels 58 in den Filtertopf 54 erforderliches Schließdrehmoment erheblich reduziert werden. Insgesamt kann dadurch ein Austausch des Filterelements 10 entscheidend vereinfacht und zügiger durchgeführt werden.

## Patentansprüche

1. Filterelement (10) zum Filtern eines Fluids, insbesondere Kraftstoff oder Öl, das zur austauschbaren Anordnung in einem Filtergehäuse (52) vorgesehen ist, mit ersten Bajonettverschlusselementen (26), über die das Filterelement (10) mit zweiten Bajonettverschlusselementen (64) des Filtergehäuses (52) lösbar verkoppelbar ist, **dadurch gekennzeichnet, dass** die ersten Bajonettverschlusselemente (26) an einem Bajonettring (22) angeordnet sind, der relativ zur Längsachse (18) des Filterelements (10) rotierbar am Filterelement (10) gelagert ist, wobei das Rotieren ein Überschreiten einer vorbestimmten Drehmomentschwelle erfordert.

2. Filterelement nach Anspruch 1, **dadurch gekennzeichnet, dass** der Bajonettring (22) an einer Endscheibe (12, 14) des Filterelements (10) befestigt ist.

3. Filterelement nach Anspruch 2, **dadurch gekennzeichnet, dass** der Bajonettring (22) mit der Endscheibe (12, 14) des Filterelements (10) verrastet ist.

4. Filterelement nach Anspruch 3, **dadurch gekennzeichnet, dass** der Bajonettring (22) Rastelemente (32) aufweist, die sich in einer zur Längsachse des Filterelements (10) axialen Richtung vom Bajonettring (22) wegerstrecken.

5. Filterelement nach Anspruch 4, **dadurch gekennzeichnet, dass** die Rastelemente (32) des Bajonettrings (22) die Endscheibe (12, 14) des Filterelements (10) randseitig hintergreifen.

6. Filterelement nach einem der Ansprüche 2 bis 5, **dadurch gekennzeichnet, dass** der Bajonettring (22) kreisförmig geschlossen ausgeführt ist und die Endscheibe (12, 14) vorzugsweise vollständig umfangsseitig umgreift.

7. Filterelement nach einem der Ansprüche 2 bis 6, **dadurch gekennzeichnet, dass** der Bajonettring (22) einen Drehanschlag (30) für die gehäuseseitig angeordneten zweiten Bajonettverschlusselemente (64) aufweist.

8. Filterelement nach einem der vorhergehenden Ansprüche, **dadurch gekennzeichnet, dass** die ersten Bajonettverschlusselemente (26) und/oder die Rastelemente (32) an dem Bajonettring (22) angeformt sind.

9. Filterelement nach einem der vorhergehenden Ansprüche, **dadurch gekennzeichnet, dass** der Bajonettring (22) als ein Kunststoffspritzgussteil ausgeführt ist.

10. Filterelement nach einem der vorhergehenden Ansprüche, **dadurch gekennzeichnet, dass** das Filterelement (10) zumindest eine Endscheibe (12, 14) mit einem Radialdichtungselement (42) zur radial innenseitig dichtenden Anlage des Filterelements (10) am Filtergehäuse (52) aufweist.

11. Filterelement nach einem der vorhergehenden Ansprüche, **dadurch gekennzeichnet, dass** der Bajonettring (22) eine Drehpositionsanzeige (34) aufweist, mittels derer eine jeweilige Drehposition des Bajonettrings (22) relativ zum Filterelement (10) bzw. dem Filtergehäuse (52) anzeigbar ist.

12. Filterelement nach einem der vorhergehenden Ansprüche, **dadurch gekennzeichnet, dass** die Drehpositionsanzeige (34) ein Profilfortsatz ist, der sich vom Bajonettring (22) axial in Richtung der jeweils anderen Endscheibe (12, 14) des Filterelements (10) wegerstreckt.

13. Filterelement nach einem der vorhergehenden Ansprüche, **dadurch gekennzeichnet, dass** beim Überschreiten der vorbestimmten Drehmomentschwelle eine Rastverbindung zwischen dem Filterelement und dem Bajonettring, insbesondere zwischen der Endscheibe und dem Bajonettring, außer Eingriff gerät.

14. Filterelement nach Anspruch 13 , **dadurch gekennzeichnet, dass** die Rastverbindung Rastvertiefungen (46) und mindestens eine Rastnase (48) aufweist.

15. Filterelement nach einem der vorhergehenden Ansprüche, wobei der Bajonettring (22) relativ zur Längsachse (18) des Filterelements (10) rotierbar am Filterelement (10) gelagert ist, **dadurch gekennzeichnet, dass** die den Bajonettring (22) tragende Endscheibe (12) an ihrem Randabschnitt (44) umlaufend angeordnete Rastvertiefungen (46) aufweist und der Bajonettring (22) zumindest eine Rastnase (48) aufweist oder dass der Bajonettring (22) Rastvertiefungen (46), insbesondere umlaufende Rastvertiefungen (46), aufweist und die Endscheibe (12) zumindest eine Rastnase (48) aufweist.

16. Fluidfilter (50), insbesondere Kraftstoff- oder Ölfilter, insbesondere für einen Verbrennungsmotor, umfassend:
- ein Filtergehäuse (52) mit einem Filtertopf (54) und mit einem Gehäusedeckel (58), der zum Verschließen einer Einführöffnung des Filtertopfs (54) in den Filtertopf (54) einschraubbar oder auf den Filtertopf (54) aufschraubbar ist; und
- ein Filterelement (10) nach einem der vorhergehenden Ansprüche, das mittels des Bajonettrings (22) mit gehäusefest, insbesondere am Filtertopf (54), angeordneten zweiten Bajonettverschlusselementen (64) unter Bildung eines Bajonettverschlusses (66) in axialer Richtung lagefixierbar ist.

## Claims

1. Filter element (10) for filtering a fluid, in particular fuel or oil which is provided for a replaceable arrangement in a filter housing (52), with first bayonet lock elements (26), via which the filter element (10) can be detachably coupled with second bayonet lock elements (64) of the filter housing (52), **characterized in that** the first bayonet lock elements (26) are disposed on a bayonet ring (22) which is rotatably mounted on the filter element (10) relative to the longitudinal axis (18) of the filter element (10), wherein the rotation requires to exceed a predetermined torque threshold.

2. Filter element according to claim 1, **characterized in that** the bayonet ring (22) is attached to an end disk (12, 14) of the filter element (10).

3. Filter element according to claim 2, **characterized in that** the bayonet ring (22) is snap-connected to the end disk (12, 14) of the filter element (10).

4. Filter element according to claim 3, **characterized in that** the bayonet ring (22) features latching elements (32) which extend away from the bayonet ring (22) in an axial direction relative to the longitudinal axis of the filter element (10).

5. Filter element according to claim 4, **characterized in that** the latching elements (32) of the bayonet ring (22) engage behind the end disk (12, 14) of the filter element (10) on the edge side.

6. Filter element according to one of the claims 2 to 5, **characterized in that** the bayonet ring (22) is circularly closed and circumferentially surrounds the end disc (12, 14) preferably completely.

7. Filter element according to one of the claims 2 to 6, **characterized in that** the bayonet ring (22) features a rotation stop (30) for the second bayonet lock elements (64) disposed on the housing side.

8. Filter element according to one of the preceding claims, **characterized in that** the first bayonet lock elements (26) and/or the latching elements (32) are molded to the bayonet ring (22).

9. Filter element according to one of the preceding claims, **characterized in that** bayonet ring (22) is realized as a plastic injection molded part.

10. Filter element according to one of the preceding claims, **characterized in that** the filter element (10) features at least one end disc (12, 14) with a radial sealing element (42) for a radial inner sealing abutment of the filter element (10) on the filter housing (52).

11. Filter element according to one of the preceding claims, **characterized in that** the bayonet ring (22) features a rotating position indicator (34) by means of which a respective rotating position of the bayonet ring (22) relative to the filter element (10) or the filter housing (52) can be indicated.

12. Filter element according to one of the preceding claims, **characterized in that** the rotating position indicator (22) is a profile extension which extends away from the bayonet ring (22) in axial direction towards the respective other end disc (12, 14) of the filter element (10).

13. Filter element according to one of the preceding claims, **characterized in that**, when exceeding the predetermined torque threshold, a latching connection between the filter element and the bayonet ring, in particular between the end disc and the bayonet ring, disengages.

14. Filter element according to claim 13, **characterized in that** the latching connection features locking recesses (46) and at least one latching lug (48).

15. Filter element according to one of the preceding claims, wherein the bayonet ring (22) is mounted relative to the longitudinal axis (18) of the filter element (10) rotatably on the filter element (10), **characterized in that** the end disc (12) supporting the bayonet ring (22) features locking recesses (46) disposed around its edge portion (44) and the bayonet ring (22) features at least one latching lug (48) or that the bayonet ring (22) features locking recesses (46), in particular circumferential locking recesses (46), and the end disc (12) features at least one latching lug (48).

16. Fluid filter (50), in particular fuel or oil filter, in particular for an internal combustion engine, comprising:
- a filter housing (52) with a filter bowl (54) and with a housing cover (58) which, for closing an insertion opening of the filter bowl (54), can be screwed into the filter bowl (54) or screwed onto the filter bowl (54), and
- a filter element (10) according to one of the preceding claims which is positionally fixable in axial direction by means of the bayonet ring (22) with second bayonet lock elements (64) fixed to the housing, in particular at the filter bowl (54), by forming a bayonet lock (66).

## Revendications

1. Élément filtrant (10) destiné à filtrer un fluide, notamment carburant ou huile, prévu pour être disposé de manière échangeable dans un boîtier de filtre (52), avec des premiers éléments de joint à baïonnette (26) par lesquels l'élément filtrant (10) peut être couplé de manière amovible avec les seconds éléments de joint à baïonnette (64) du boîtier de filtre (52), **caractérisé en ce que** les premiers éléments de joint à baïonnette (26) sont disposés sur un anneau à baïonnette (22) qui est logé par rapport à l'axe longitudinal (18) de l'élément filtrant (10) de manière à pouvoir tourner sur l'élément filtrant (10), la rotation impliquant un dépassement d'un seuil de couple de rotation prédéterminé.

2. Élément filtrant selon la revendication 1, **caractérisé en ce que** l'anneau à baïonnette (22) est fixé à un disque d'extrémité (12, 14) de l'élément filtrant (10).

3. Élément filtrant selon la revendication 2, **caractérisé en ce que** l'anneau à baïonnette (22) est encliqueté sur un disque d'extrémité (12, 14) de l'élément filtrant (10).

4. Élément filtrant selon la revendication 3, **caractérisé en ce que** l'anneau à baïonnette (22) présente des éléments d'encliquetage (32) qui s'étendent en s'écartant de l'anneau à baïonnette (22) dans une direction axiale par rapport à l'axe longitudinal de l'élément filtrant (10).

5. Élément filtrant selon la revendication 4, **caractérisé en ce que** les éléments d'encliquetage (32) de l'anneau à baïonnette (22) s'engagent derrière le disque d'extrémité (12, 14) de l'élément filtrant (10) sur le bord.

6. Élément filtrant selon l'une des revendications 2 à 5, **caractérisé en ce que** l'anneau à baïonnette (22) est fermé de façon circulaire et entoure le disque d'extrémité (12, 14) de préférence complètement en sens circonférentiel.

7. Élément filtrant selon l'une des revendications 2 à 6, **caractérisé en ce que** l'anneau à baïonnette (22) présente une butée de rotation (30) pour les seconds éléments de joint à baïonnette (64) disposés côté boîtier.

8. Élément filtrant selon l'une des revendications précédentes, **caractérisé en ce que** les premiers éléments de joint à baïonnette (64) et/ou les éléments d'encliquetage (32) sont moulées sur l'anneau à baïonnette (22).

9. Élément filtrant selon l'une des revendications précédentes, **caractérisé en ce que** l'anneau à baïonnette (22) est exécute en tant que pièce en matière plastique moulée par injection.

10. Élément filtrant selon l'une des revendications précédentes, **caractérisé en ce que** l'élément filtrant (10) présente au moins un disque d'extrémité (12, 14) avec un élément d'étanchéité radial (42) pour le contact d'étanchéité interne radiale de l'élément filtrant (10) sur le boîtier de filtre (52).

11. Élément filtrant selon l'une des revendications précédentes, **caractérisé en ce que** l'anneau à baïonnette (22) présente un indicateur de position de rotation (34) au moyen duquel une position respective de rotation de l'anneau à baïonnette (22) relative à l'élément filtrant (10) ou au boîtier de filtre (52) peut être indiquée.

12. Élément filtrant selon l'une des revendications précédentes, **caractérisé en ce que** l'indicateur de position de rotation (34) est un prolongement profilé qui s'étend en s'écartant de l'anneau à baïonnette (22) axialement en direction de l'autre disque d'extrémité respectif (12, 14) de l'élément filtrant (10).

13. Élément filtrant selon l'une des revendications précédentes, **caractérisé en ce que,** lorsque le seuil de couple de rotation prédéterminé est dépassé, une liaison par encliquetage entre l'élément filtrant et l'anneau à baïonnette, notamment entre le disque d'extrémité et l'anneau à baïonnette, est mise hors de prise.

14. Élément filtrant selon la revendication 13, **caractérisé en ce que** la liaison par encliquetage présente des renfoncements d'encliquetage (46) et au moins un ergot d'encliquetage (48).

15. Élément filtrant selon l'une des revendications précédentes, l'anneau à baïonnette (22) étant logé par rapport à l'axe longitudinal (18) de l'élément filtrant (10) de manière à pouvoir tourner sur l'élément filtrant (10), **caractérisé en ce que** le disque d'extrémité (12) supportant l'anneau à baïonnette (22) présente sur son tronçon de bord (44) des renfoncements d'encliquetage (46) disposés circonférentiellement et l'anneau à baïonnette (22) présente au moins un ergot d'encliquetage (48) ou que l'anneau à baïonnette (22) présente des renfoncements d'encliquetage (46), notamment des renfoncements d'encliquetage (46) circonférentiels, et le disque d'extrémité (12) présente au moins un ergot d'encliquetage (48).

16. Filtre à fluide (50), notamment filtre à carburant ou à huile, notamment pour un moteur à combustion interne, comprenant :
- un boîtier de filtre (52) avec une cuve de filtration (54) et avec un couvercle de boîtier (58) qui, pour fermer une ouverture d'introduction de la cuve de filtration (54), peut être vissé dans la cuve de filtration (54) ou sur la cuve de filtration (54) ; et
- un élément filtrant (10) selon l'une des revendications précédentes, qui peut être immobilisé, notamment sur la cuve de filtration (54), dans la direction axiale au moyen de l'anneau à baïonnette (22) avec des seconds éléments de joint à baïonnette (64) en formant un joint à baïonnette (66).
